(19) Europäisches Patentamt
European Patent Office
Office européen des brevets

(11) Veröffentlichungsnummer: **0 372 381 B1**

(12) **EUROPÄISCHE PATENTSCHRIFT**

(45) Veröffentlichungstag der Patentschrift: **21.06.95**

(51) Int. Cl.[6]: **C04B 35/58**, C04B 35/80, C04B 41/45, C04B 41/50, C04B 41/49

(21) Anmeldenummer: **89122060.0**

(22) Anmeldetag: **29.11.89**

# (54) Verfahren zur Herstellung von Faserverbundkeramik.

(30) Priorität: **03.12.88 DE 3840781**

(43) Veröffentlichungstag der Anmeldung:
**13.06.90 Patentblatt 90/24**

(45) Bekanntmachung des Hinweises auf die Patenterteilung:
**21.06.95 Patentblatt 95/25**

(84) Benannte Vertragsstaaten:
**CH DE FR GB IT LI**

(56) Entgegenhaltungen:
**EP-A- 0 202 177**
**EP-A- 0 312 825**
**EP-A- 0 313 878**
**EP-A- 0 315 907**
**FR-A- 2 583 744**
**US-A- 4 460 640**
**US-A- 4 482 669**
**US-A- 4 618 591**

(73) Patentinhaber: **HOECHST AKTIENGESELLSCHAFT**

**D-65926 Frankfurt (DE)**

(72) Erfinder: **Peuckert, Marcellus, Dr.**
**Platanenweg 8**
**D-6238 Hofheim am Taunus (DE)**
Erfinder: **Brück, Martin**
**Haneckstrasse 17**
**D-6238 Hofheim am Taunus (DE)**
Erfinder: **Gerdau, Thomas, Dr.**
**Königsteiner Strasse 17**
**D-6239 Eppstein/Taunus (DE)**
Erfinder: **Vaahs, Tilo, Dr.**
**Am Flachsland 54**
**D-6233 Kelkheim(Taunus) (DE)**
Erfinder: **Kleiner, Hans-Jerg, Dr.**
**Altkönigstrasse 11a**
**D-6242 Kronberg/Taunus (DE)**
Erfinder: **Aldinger, Fritz, Dr.**
**Barbarossastrasse 44**
**D-6458 Rodenbach (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

**Beschreibung**

Die vorliegende Erfindung betrifft ein Verfahren zur Herstellung von Faserverbundkeramik.

Faserverbundkeramik gewinnt wegen ihrer hohen Bruchfestigkeit, Formstabilität, Temperatur- und Korrosionsbeständigkeit eine laufend steigende Bedeutung.

Die guten Eigenschaften der Faserverbundkeramik basieren auf der Kombination einer Matrix und eingebauter Fäden.

In der EP-0 125 772 A1 wird eine Faserverbundkeramik beschrieben, bei der Fasern zunächst mit Polysilazan imprägniert werden und anschließend das Polysilazan thermisch zu Siliziumnitrid zersetzt wird. Nachteilig bei diesem Verfahren ist, daß das Polysilazan bei der Imprägnierung der Fasern in einem Lösungsmittel gelöst werden muß.

Nach der Imprägnierung muß das Lösungsmittel entfernt werden. Durch die Entfernung des Lösungsmittels aus dem Faserverbund entstehen Hohlräume, wodurch eine in ihren Eigenschaften nicht immer befriedigende Faserverbundkeramik resultiert. Es hat sich gezeigt` daS Faserverbundkeramiken eine steigende Bruchfestigkeit und formbeständigkeit dann haben, wenn nur wenige Hohlräume in der Faserverbundkeramik vorhanden sind.

Es bestand daher die Aufgabe, ein Verfahren zur Herstellung von Faserverbundkeramiken anzugeben, mit welchem eine Faserverbundkeramik mit einer gesteigerten Bruchfestigkeit und Formstabilität erhalten wird, die im Rohzustand formstabil und leicht bearbeitbar ist und die während des Erhitzens formstabil bleibt.

Aus EP-A-202 177 ist ein Verfahren zur Herstellung einer Verbundkeramik durch Imprägnierung eines keramischen Trägers, z. B. von keramischen Fasern, mit einem schmelzflüssigen Polysilazan, anschließendes Umschmelzbarmachen des Polysilazans mittels freien Radikalen und danach thermische Behandlung bei 1500 bis 2000 ° C bekannt.

Aus FR-A-2 583 744 ist das Umschmelzbarmachen von bestimmten Polysilazanen mit $NH_3$ bekannt.

Es sind jedoch keineswegs alle Polysilazane schmelzbar und daher für eine Imprägnierung von keramischen Fasern geeignet.

Ein Gegenstand der vorliegenden Erfindung ist ein Verfahren zur Herstellung von Faserverbundkeramik, bei dem man in einem ersten Schritt Fasern mit einem schmelzflüssigem Polysilazan imprägniert, in einem zweiten Schritt das Polysilazan in den Fasern in den unschmelzbaren Zustand überführt und in einem dritten Schritt die imprägnierten Fasern auf 800 bis 2000 °C in Stickstoff-, Edelgas- oder Ammoniak-Atmosphäre erhitzt, dadurch gekennzeichnet, daß man ein Schmelzflüssiges Polysilazan der allgemeinen Formel (I)

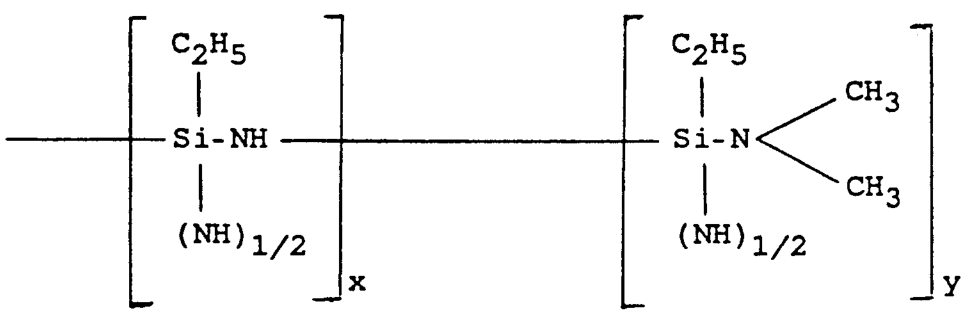

worin x, y die Molfraktionen der beiden Struktureinheiten bedeuten und wobei x + y = 1 und x = 0,7-0,95 ist, oder

der allgemeinen Formel (II)

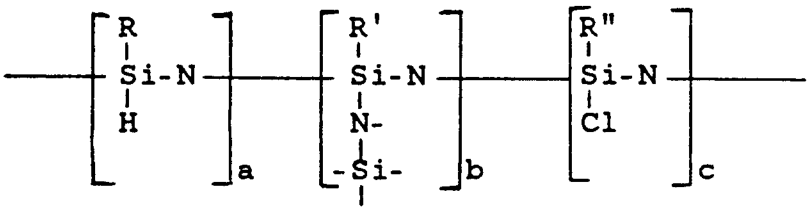

wobei die freien Valenzen der Stickstoffatome mit H-Atomen oder Silylresten R*SiXN< (X = H, Cl, N<, $CH_2CH_2Si\leftarrow$) abgesättigt sind und wobei R, R', R'', R* Alkyl- oder Alkenylgruppen mit bis zu 6 C-Atomen, vorzugsweise bis zu 3 C-Atomen sind und a, b, c die Molfraktionen der jeweiligen Struktureinheiten bedeuten, verwendet und das Polysilazan mittels $NH_3$, Urotropin, einem Amin oder einem Chlorsilan der allgemeinen Formel $(CH_3)_nSiCl_m$, worin n + m = 4 und n = 1, 2 oder 3 ist unschmelzbar macht Besonders bevorzugt ist R = R' = R'' = R* = $CH_3$.

Dabei sollen unter "Fasern" sowohl eindimensionale Gebilde als auch aus diesen zusammengesetzte zweidimensionale Gebilde aller Art verstanden werden.

Die beim erfindungsgemäßen Verfahren eingesetzten Fasern können etwa aus C, SiC, $Si_3N_4$, $Al_2O_3$ oder kohlenstoffaserverstärktem Kohlenstoff bestehen. Man kann z.B. zunächst schmelzflüssiges Polysilazan zu Fasern verspinnen, diese bei 800 bis 1600 °C thermisch in $Si_3N_4$-Fasern umwandeln, daraus ein zweidimensionales Gebilde herstellen, dieses dann erfindungsgemäß mit dem gleichen oder einem anderen schmelzflüssigen Polysilazan imprägnieren, das Polysilazan in den unschmelzbaren Zustand überführen und auf 800 bis 2000 °C erhitzen.

Falls man das Polysilazan mittels eines Amins unschmelzbar macht, verwendet man im allgemeinen Methylamin oder Ethylamin. Das bevorzugte Mittel zum Umschmelzbarmachen ist jedoch $NH_3$.

Man kann die erfindungsgemäße Kombination von Schritten auch mehrere Male hintereinander auf dieselben Fasern anwenden.

Weiter kann man Verbindungen des Magnesiums, Aluminiums, Yttriums oder eines seltenen Erdmetalles einzeln oder als Gemisch als Füllstoff für die Fasern in dem geschmolzenen Polysilazan lösen und die Fasern mit dieser Lösung, statt mit reinem Polysilazan imprägnieren; besonders geeignete Verbindungen sind die Nitrate, Alkoholate, Acetate oder Acetylacetonate einzeln oder als Gemisch.

Die imprägnierten Fasern können natürlich auch vor der Erhitzung zu einem Formkörper geformt werden.

Zur Erhöhung der Korrosionsfestigkeit kann es vorteilhaft sein, wenn man die fertige und bereits mechanisch bearbeitete Faserverbundkeramik einer weiteren Behandlung mit schmelzflüssigem Polysilazan unterwirft, nämlich sie damit beschichtet, die Schicht unschmelzbar macht und anschließend auf 800 bis 2000 °C in Stickstoff-, Edelgas-oder Ammoniak-Atmosphäre erhitzt.

Die Herstellung der als Ausgangsmaterialien geeigneten Verbindungen der Formel (I) wird in der DE-Patentanmeldung P 37 37 921.6 beschrieben. Diese Anmeldung betrifft allgemein die Herstellung von polymeren Silazanen, indem man ein oder mehrere Dialkylaminoorganyldichlorsilane der Formel $RSiCl_2$-NR'R', worin R = $C_1$-$C_4$-Alkyl, Vinyl oder Phenyl und R' = $C_1$-$C_4$-Alkyl ist, mit mindestens 3,35 Mol Ammoniak pro Mol Silan in einem Lösungsmittel bei Temperaturen von -80 °C bis +70 °C umsetzt.

Das als Ausgangsprodukt für die polymeren Silazane der Formel (I) eingesetzte Dimethylaminoethyldichlorsilan $C_2H_5SiCl_2$-$N(CH_3)_2$ (im folgenden auch als "Aminochlorsilan" bezeichnet) kann nach S.S. Washburne, W.R. Peterson, J. Organometal. Chem. 21 (1970), Seite 59 erhalten werden, indem man Ethyltrichlorsilan $C_2H_5SiCl_3$ mit Dimethylamin umsetzt. Die Umsetzung wird in aprotischen Lösungsmitteln, vorzugsweise polaren wie Ethern, insbesondere in THF durchgeführt.

Das Molverhältnis von Ethyltrichlorsilan zu Dimethylamin kann Werte zwischen 1:1 und 1:3 annehmen, bevorzugt wird ein Verhältnis von etwa 1:2.

Die bei der Reaktion entstehenden Ammoniumsalze fallen aus der Reaktionslösung aus, während das gebildete Aminochlorsilan in Lösung bleibt.

Das erhaltene Aminochlorsilan der Formel $C_2H_5SiCl_2$-$N(CH_3)_2$ wird pro Mol mit mindestens 3,35 Mol, vorzugsweise mit mindestens 3,5 Mol Ammoniak in aprotischen Lösungsmitteln, vorzugsweise polaren wie Ethern, insbesondere THF umgesetzt. Dies geschieht bei Temperaturen zwischen -80 °C und +70 °C, bevorzugt bei -10 °C bis 0 °C.

Das entstehende polymere Silazan der Formel (I) löst sich in allen gängigen aprotischen Lösungsmitteln vollständig.

Si ist in Formel (I) nie direkt mit Si verbunden, sondern immer über eine NH-Brücke. Ist beispielsweise x = 0,9 (und damit y = 0,1), so sind 10 % der ursprünglich vorhandenen Dimethylaminogruppen im Polieren noch enthalten, 90 % der Siliziumatome sind dreifach über NH-Brücken vernetzt. Das steuerbare Verhältnis von x zu y bestimmt den Vernetzungsgrad und damit die Viskosität und die Verarbeitbarkeit zur Keramik.

Dabei erhält man Werte von x = 0,7-0,95 (y = 0,3-0,05), wenn man mindestens 3,35 Mol $NH_3$ pro Mol Aminochlorsilan verwendet. Vorzugsweise ist x = 0,85-0,95 (y = 0,15-0,05); dies ist dann der Fall, wenn man mindestens 3,5 Mol $NH_3$ pro Mol Aminochlorsilan verwendet. Im allgemeinen verwendet man höchstens 8 Mol, vorzugsweise höchstens 6 Mol $NH_3$ pro Mol Aminochlorsilan. Natürlich führt auch eine größere relative Menge $NH_3$ als 8 Mol zum Erfolg, aber dieser höhere Aufwand ist überflüssig.

Die Herstellung der ebenfalls als Ausgangsmaterialien für die erfindungsgemäße Faserverbundkeramik geeigneten Verbindungen der Formel (II) wird zum Teil schon in der DE-Patentanmeldung P 37 33 727.0 beschrieben; die Verbindungen werden dort als polymere Hydridochlorsilazane bezeichnet. Zu ihrer Herstellung werden Oligohydridoalkylsilazane der allgemeinen Formel $(R^1SiHNH)_n$,worin n etwa 3 bis 12 ist und $R^1$ eine Alkyl- oder Alkenylgruppe mit bis zu 6 C-Atomen bedeutet, mit einem Dichlorhydridoalkylsilan der allgemeinen Formel $R^2SiHCl_2$, worin $R^2$ eine Alkyl- oder Alkenylgruppe mit bis zu 6 C-Atomen bedeutet, bei 30 bis 300 °C umgesetzt. Es werden dabei leichtflüchtige Nebenprodukte gebildet. Diese Nebenprodukte werden während der Reaktion entfernt.

Die dabei eingesetzten Oligohydridoalkylsilazane $(R^1SiHNH)_n$,mit n etwa gleich 3 bis etwa gleich 12, können dadurch erhalten werden, daß man ein Dichlorhydridoalkylsilan der Formel $R^1SiHCl_2$, wobei $R^1$ die obige Bedeutung hat, mit überschüssigem $NH_3$ in einem Lösungsmittel umsetzt, wie in US-PS 4 482 669 beschrieben (siehe dort insbesondere Spalten 4, 5, 7, 8). Dabei entsteht im allgemeinen ein Gemisch linearer und cyclischer Oligomerer mit verschiedenen Kettenlängen n.

Die Reste $R^1$ und $R^2$ in den Oligohydridoalkylsilazanen $(R^1SiHNH)_n$ (im folgenden auch kurz "Oligosilazane" genannt) bzw. im Dichlorhydridoalkylsilan $R^2SiHCl_2$ (im folgenden auch kurz "Dichloralkylsilan" genannt) können gleich oder verschieden sein, vorzugsweise haben sie bis zu 3 C-Atome.

Besonders bevorzugt ist es, daß $R^1 = R^2 = CH_3$ ist. Vorzugsweise beträgt das molare Verhältnis der Reaktanten bei der obigen Umsetzung Dichloralkylsilan: $R^1SiHNH$-Einheit des Oligosilazans etwa 0,2 : 1 bis 1,5 : 1, insbesondere 0,3 : 1 bis 1 : 1.

Zur Umsetzung der Reaktanten miteinander werden vorzugsweise die Oligosilazane vorgelegt und das Dichloralkylsilan zugegeben.
Da die Reaktion exotherm ist, wird beim Zusammengeben der Reaktanten vorzugsweise zunächst die Temperatur bei 30 bis 50 °C gehalten. Anschließend erhitzt man auf Temperaturen von 100 bis 300 °C, vorzugsweise auf 120 bis 250 °C.

Die als Nebenprodukte gebildeten Leichtsieder, wie $RSiHCl_2$, $RSiClH_2$, $RSiCl_3$, HCl, $H_2$, $NH_3$ (wobei R = $R^1$ oder $R^2$ ist), entweichen während der Reaktion teilweise. Nach beendeter Umsetzung werden die restlichen Leichtsieder im allgemeinen durch Anlegen von Vakuum aus dem Reaktionsgefäß entfernt.

Das bei der Reaktion ebenfalls entstehende $NH_4Cl$ sublimiert im Verlauf der Reaktion zum größten Teil aus dem Reaktionsgemisch ab. Der eventuell verbliebene Rest des $NH_4Cl$ kann durch Extraktion mit einem inerten organischen Lösungsmittel, wie n-Hexan, Toluol, Ether von dem hergestellten polymeren Hydridochlorsilazan abgetrennt werden.

Die Reaktionsdauer richtet sich nach der Geschwindigkeit des Aufheizens und der Reaktionstemperatur. Im allgemeinen genügt eine Reaktionszeit von 5 bis 7 Stunden.

Es ist auch möglich, die Reaktion in einem organischen Lösungsmittel durchzuführen. Geeignet sind solche Lösungsmittel, die sich inert gegenüber den Reaktanten verhalten und einen ausreichend hohen Siedepunkt aufweisen, also z.B. gesättigte aliphatische oder aromatische Kohlenwasserstoffe wie n-Decan, Decalin, Xylol, Toluol, chlorierte Kohlenwasserstoffe wie Chlorbenzol oder Ether wie Dibenzylether, Diethylenglykoldiethylether. Bei Verwendung eines Lösungsmittels, in dem das gebildete $NH_4Cl$ unlöslich ist, kann letzteres durch Filtration abgetrennt werden. Die polymeren Hydridochlorsilazane werden dann durch Abdestillation des Lösungsmittels unter reduziertem Druck erhalten.

Gegebenenfalls kann das Verfahren auch unter vermindertem Druck durchgeführt werden. Auch bei Drücken im Bereich von 1 bis 10 Atmosphären kann gearbeitet werden. Das Verfahren kann auch kontinuierlich gestaltet werden.

Die so hergestellten Polysilazane der Formel (II) haben eine netzartige Struktur. Die Werte der Molfraktionen b und c sind umso höher (und entsprechend der Wert von a umso niedriger), je größer das Verhältnis Dichloralkylsilan : $R^1SiHNH$-Einheit des Oligosilazans ist. Die jeweils vorliegenden Werte von a, b, c können durch Integration der $^1H$-NMR-Spektren und durch die Elementaranalyse ermittelt werden. Im allgemeinen liegen die Werte a, b, c, bei 0,1 bis 0,8, wobei a + b + c = 1 ist. Bevorzugt sind Werte für a

und b von 0,1 bis 0,5, insbesondere von 0,2 bis 0,4. Die bevorzugten Werte für c liegen bei 0,1 bis 0,6, insbesondere bei 0,3 bis 0,6. Diese Werte lassen sich wie gesagt über den relativen Anteil des Dichloralkylsilans im Reaktionsgemisch einstellen und über die genannten Analysenmethoden kontrollieren.

Überraschenderweise hat sich gezeigt, daß bei der erfindungsgemäßen Herstellung von Faserverbundkeramik oft schon eine einmalige Imprägnierung mit schmelzflüssigem Polysilazan, gefolgt von Umschmelzbarmachen und Erhitzen (Dreischritt-Sequenz) eine völlig ausreichende Bruchfestigkeit der Faserverbundkeramik ergibt. Durch mehrmalige, nacheinander durchgeführte Dreischritt-Sequenzen kann jedoch manchmal eine weitere Steigerung der Bruchfestigkeit und der Korrosionsbeständigkeit der Faserverbundkeramik erreicht werden.

Das erfindungsgemäße Verfahren ist auf eindimensionale Gebilde und aus diesen aufgebaute zweidimensionale Gebilde, also Materialien wie Gewebe, Vliese, Filamente, Fäden, Fasern, Stränge oder Netzwerke gleichermaßen anwendbar. Der Begriff "Fasern" soll, wie gesagt, stellvertretend für alle diese Gebilde benutzt werden. Die Fasern können in schmelzflüssiges Polysilazan getaucht werden, oder das schmelzflüssige Polysilazan wird auf die Fasern aufgetropft oder gegossen. Es kann vorteilhaft sein, dickere Formkörper aus einzelnen, imprägnierten, relativ dünnen Materialflächen durch Übereinanderschichtung zu bilden und diese nach der Überführung des Polysilazans in den unschmelzbaren Zustand weiter zu bearbeiten; in anderen Fällen kann es besser sein, die zunächst nicht imprägnierten Materialflächen übereinander zu schichten und dieses Haufwerk insgesamt mit Polysilazan zu imprägnieren.

Führt man die (dem Umschmelzbarmachen des Polysilazans folgende) Erhitzung der imprägnierten Fasern in Stickstoff -oder Edelgas-Atmosphäre bei 800 bis 1200 °C durch, so erhält man eine amorphe Silizium-Matrix, die aus etwa 40 bis 50 Gew.% Si, 20 bis 30 Gew.% N, 15 bis 25 Gew.% C, Rest O und Cl besteht.

Führt man die Erhitzung der imprägnierten Fasern dagegen in Ammoniak-Atmosphäre oder Ammoniak enthaltender Inertgas-Atmosphäre bei 800 bis 1200 °C durch, so erhält man eine amorphe Silizium-Matrix, die aus etwa 50 bis 60 Gew.% Si, 30 bis 40 Gew.-% N, weniger als 5 Gew.-% O, weniger als 1 Gew.-% C und weniger als 1 Gew.-% Cl besteht.

Bei der Erhitzung in $N_2$, Edelgas oder $NH_3$ auf Temperaturen von 1200 °C bis etwa 1600 °C, insbesondere von 1400 °C bis etwa 1600 °C erhält man eine Matrix, die teilkristallin ist und aus $\alpha$-$Si_3N_4$ besteht.

Bei der Erhitzung auf Temperaturen von etwa 1600 bis 2000 °C erhält man eine Matrix, die aus $\beta$-$Si_3N_4$ besteht. Oberhalb von etwa 1800 °C muß dann unter erhöhtem Stickstoffdruck von etwa 10 bis 50 bar erhitzt werden, um eine Zersetzung des $Si_3N_4$ zu verhindern.

In den folgenden Beispielen wurde die Biegefestigkeit der Faserverbundkeramiken auf der Universalprüfmaschine Instron 1326 als 4-Punkt-Biegebruchfestigkeit nach der USA Norm Mil.-STD 1942 gemessen: 4-Punkt-Auflager mit 40 mm/20 mm Stützabstand und konstanter Krafterhöhung von 500 N/s an Probekörpern mit den Maßen 3,5 mm • 4,5 mm • 45 mm.

Die folgenden Beispiele erläutern die Erfindung. Die Prozentzahlen sind Gewichtsprozente, falls nicht anders vermerkt.

## Beispiel 1

Polysilazan der Formel (I) mit x = 0,9 und y = 0,1 und Kohlenstoffasern (®Sigrafil C der Fa. Sigri GmbH, Meitingen, BRD; mit 40000 Einzelfäden von je 7 µm Durchmesser) wurden in ein Gefäß gegeben. Das Gefäß wurde unter Stickstoffatmosphäre gebracht und auf 100 °C erwärmt. Die Kohlenstoffasern wurden vorher in einem Aceton-Bad von ihrer Schlichte befreit.

Die imprägnierten Kohlenstoffasern wurden aus der Polysilazan-Schmelze entnommen und auf 25 °C abgekühlt. 20 in dieser Art imprägnierte Kohlenstoffasern wurden im rechten Winkel zueinander zu einem Block aufgeschichtet und in einer Presse bei einer Temperatur von 50 °C unter einem Druck von 50 bar verpreßt. Der so erhaltene Formkörper wurde zum Unschmelzbarmachen des Polysilazans 2 Stunden lang in einer $CH_3SiCl_3$-Atmosphäre bei Raumtemperatur gehalten.

Anschließend wurde der Formkörper während einer Aufheizzeit von 15 Stunden auf eine Temperatur von 100 °C in Stickstoff-Atmosphäre erhitzt, 10 Stunden lang auf dieser Temperatur belassen und anschließend abgekühlt. Die gemessene Bruchfestigkeit der erhaltenen Faserverbundkeramik ist in der den Beispielen folgenden Tabelle notiert.

**Beispiel 2**

Es wurde eine Faserverbundkeramik wie in Beispiel 1 hergestellt. Diese wurde sodann mit demselben Polysilazan wie im Beispiel 1 zwei weiteren Dreischritt-Sequenzen (Imprägnieren, Umschmelzbarmachen, Erhitzen) unterzogen.
Die gemessene Biegebruchfestigkeit der erhaltenen Faserverbundkeramik ist wieder in der Tabelle notiert.

**Beispiel 3**

Polysilazan der Formel (II) mit R = R' = R'' = $CH_3$ und $Al_2O_3$-$SiO_2$-Fasern (85 % $Al_2O_3$, 15 % $SiO_2$) mit 1000 Einzelfäden von je 0,017 mm Durchmesser wurden in einem Gefäß unter Stickstoff-Atmosphäre auf 180 °C erwärmt, dann wurden die Fasern aus der Schmelze entnommen und auf 25 °C abgekühlt. Die imprägnierten Fasern wurden kreuzweise geschichtet und in einer Presse bei 110 °C unter 40 bar Druck zu einem Formkörper verpreßt. In einem Druckgefäß wurde das imprägnierte Material 2 Stunden lang bei Raumtemperatur unter Ammoniak-Atmosphäre gehalten und dann innerhalb von 15 Stunden auf eine Temperatur von 1400 °C unter einem Ammoniakdruck von 10 bar erhitzt, 10 Stunden lang auf dieser Temperatur belassen und anschließend abgekühlt. Die Matrix bestand zu 44 Gew.% aus $Si_3N_4$. Die gemessene Biegebruchfestigkeit der erhaltenen Faserverbundkeramik ist wieder in der Tabelle notiert.

**Beispiel 4**

SiC-Fasern mit 500 Einzelfäden von je 0,015 mm Durchmesser wurden unter Stickstoff als Schutzgas durch ein Bad aus geschmolzenem Polysilazan der Formel (I) mit x = 0,8 und y = 0,2 mit einem Zusatz von 5 Gew.-% Yttriumacetat gezogen. Die so imprägnierten SiC-Fasern wurden kreuzweise übereinandergeschichtet, bei einer Temperatur von 50 °C in einer Presse unter 40 bar Druck verpreßt und 2 Stunden lang in Ammoniak-Atmosphäre gehalten.
Unter einem Stickstoffdruck von 5 bar wurde das Formteil innerhalb von 15 Stunden auf 1700 °C erhitzt, 10 Stunden lang auf dieser Temperatur belassen und anschließend abgekühlt.
Die Matrix bestand zu 78 Gew.-% aus $\beta$-$Si_3N_4$. Die gemessene Biegebruchfestigkeit der erhaltenen Faserverbundkeramik ist wieder in der Tabelle notiert.

**Beispiel 5**

Polymeres Hydridochlorsilazan der Formel (II) mit R = R' = R'' = $CH_3$ wurde unter $N_2$-Schutzgas in eine Schmelzspinnapparatur gegeben, auf 140 °C erhitzt und die Schmelze mittels eines Kolbens durch eine Spinndüse von 0,1 mm Durchmesser gedrückt. Unter dem eigenen Gewicht wurde die Spinnfaser zu einer Faserstärke von 20 $\mu$m gestreckt. Die resultierenden Fasern wurden bei Raumtemperatur mit $NH_3$-Gas behandelt und dadurch unschmelzbar gemacht und anschließend in einem Ofen unter $NH_3$-Atmosphäre pyrolysiert. Dazu wurde die Temperatur während 7 Stunden von 25 °C auf 1200 °C erhöht, 1 Stunde bei 1200 °C gehalten und dann während 4 Stunden wieder auf Raumtemperatur gesenkt. Die resultierende Faser war röntgenamorph und enthielt neben Si und N als Hauptbestandteilen noch 0,1 Gew.-% C, 0,6 Gew.-% Cl und 2,0 Gew.-% O. Die keramische Ausbeute der Pyrolyse betrug 64 Gew.-%. Die Zugfestigkeit der Faser betrugt 2 GPa.

Die so hergestellten Fasern wurden in Strängen aus je 500 Einzelfäden durch ein Bad aus geschmolzenem Polysilazan der Formel (I) mit x = 0,8 und y = 0,2 unter Stickstoff-Schutzgas gezogen. Die so imprägnierten Fasern wurden kreuzweise übereinandergeschichtet und bei 50 °C unter einem Druck von 40 bar zu einem Formkörper verpreßt. Der Formkörper wurde 2 h in $NH_3$-Atmosphäre gehalten. Unter Stickstoffdruck von 1 bar wurde das Formteil innerhalb von 20 h auf 1200 °C erhitzt, 10 h lang bei dieser Temperatur belassen und anschließend abgekühlt. Die gemessene Biegedruckfestigkeit ist in der Tabelle notiert.

Tabelle

| Beispiel Nr. | Faserart | Biegebruchfestigkeit MPa |
|---|---|---|
| 1 | C | 110 |
| 2 | C | 262 |
| 3 | $Al_2O_3$-$SiO_2$ | 186 |
| 4 | SiC | 392 |
| 5 | $Si_3N_4$ | 463 |

## Patentansprüche

**1.** Verfahren zur Herstellung von Faserverbundkeramik, bei dem man in einem ersten Schritt Fasern mit einem schmelzflüssigem Polysilazan imprägniert, in einem zweiten Schritt das Polysilazan in den Fasern in den unschmelzbaren Zustand überführt und in einem dritten Schritt die imprägnierten Fasern auf 800 bis 2000 °C in Stickstoff-, Edelgas- oder Ammoniak-Atmosphäre erhitzt,
dadurch gekennzeichnet, daß man ein schmelzflüssiges Polysilazan der allgemeinen Formel (I)

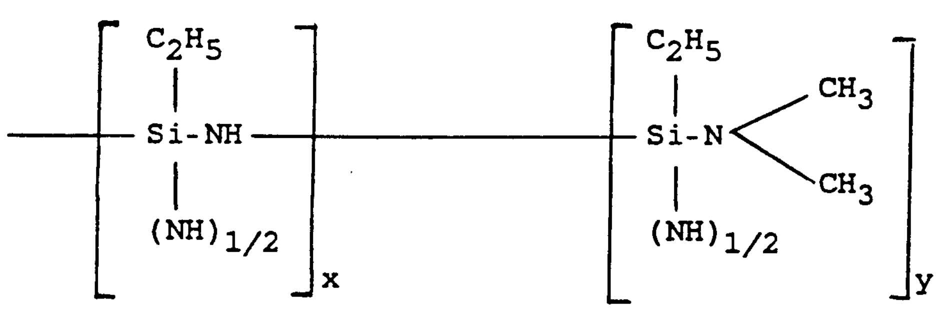

worin x, y die Molfraktionen der beiden Struktureinheiten bedeuten und wobei $x + y = 1$ und $x = 0{,}7$ bis 0,95 ist, oder (II)

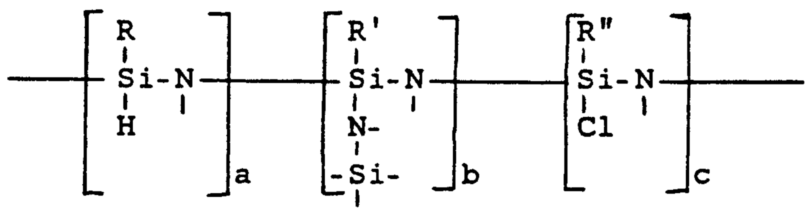

wobei die freien Valenzen der Stickstoffatome mit H-Atomen oder Silylresten R*SiXN< (X = H, Cl, N<, $CH_2CH_2Si$←) abgesättigt sind und wobei R, R', R'', R* Alkyl- oder Alkenylgruppen mit bis zu 6 C-Atomen und a, b, c die Molfraktionen der jeweiligen Struktureinheiten bedeuten, verwendet und das Polysilazan mittels $NH_3$, Urotropin, einem Amin oder einem Chlorsilan der allgemeinen Formel $(CH_3)_nSiCl_m$ worin $n + m = 4$ und $n = 1$, 2 oder 3 ist unschmelzbar macht.

**2.** Verfahren nach Anspruch 1, dadurch gekennzeichnet, daß R, R', R'', R* Alkyl- oder Alkenylgruppen mit bis zu 3 C-Atomen sind.

**3.** Verfahren nach Anspruch 1, dadurch gekennzeichnet, daß $R = R' = R'' = R^* = CH_3$ ist.

**4.** Verfahren nach einem der Ansprüche 1 bis 3, dadurch gekennzeichnet, daß man Fasern aus C, SiC, $Si_3N_4$ oder $Al_2O_3$ oder kohlenstoffaserverstärktem Kohlenstoff verwendet.

**5.** Verfahren nach einem der Ansprüche 1 bis 3, dadurch gekennzeichnet, daß man zunächst schmelzflüssiges Polysilazan zu Fasern verspinnt, diese bei 800 bis 1600 °C thermisch in $Si_3N_4$-Faser umwandelt, daraus ein zweidimensionales Gebilde herstellt, dieses dann mit demselben oder einem anderen schmelzflüssigen Polysilazan imprägniert, das Polysilazan in den unschmelzbaren Zustand überführt und auf 800 bis 2000 °C erhitzt.

**6.** Verfahren nach einem der Ansprüche 1 bis 5, dadurch gekennzeichnet, daß man die Folge der drei Verfahrensschritte mindestens zweimal nacheinander an denselben Fasern durchführt.

**7.** Verfahren nach einem der Ansprüche 1 bis 6, dadurch gekennzeichnet, daß man Verbindungen des Magnesiums, Aluminiums, Yttriums oder eines seltenen Erdmetalles einzeln oder als Gemisch als Füllstoff für die Fasern in dem geschmolzenen Polysilazan löst und die Fasern mit dieser Lösung statt mit reinem Polysilazan imprägniert.

**8.** Verfahren nach Anspruch 7, dadurch gekennzeichnet, daß man als Füllstoff die Nitrate, Alkoholate, Acetate oder Acetylacetonate der genannten Metalle einzeln oder als Gemisch verwendet.

## Claims

**1.** A process for the production of a ceramic/fiber composite, in which fibers are impregnated with a molten polysilazane in a first step, the polysilazane in the fibers is converted into the infusible state in a second step, and, in a third step, the impregnated fibers are heated to 800 to 2000 °C in an atmosphere of nitrogen, noble gas or ammonia, which comprises using a molten polysilazane of the formula (I)

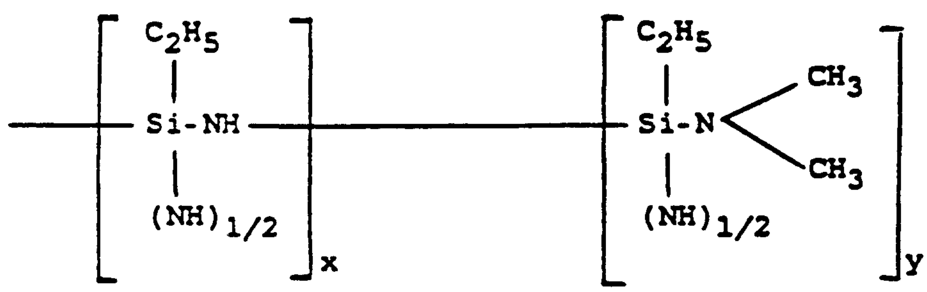

in which x and y represent the mole fractions of the two structural units and where x + y = 1 and x = 0.7 to 0.95, or (II)

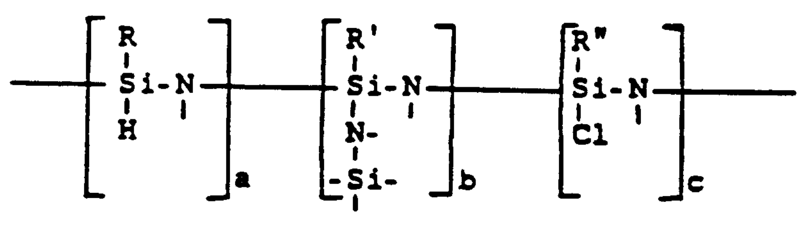

where the free valencies of the nitrogen atoms are satisfied with H atoms or silyl radicals $R^*SiXN<$ (X = H, Cl, N<, $CH_2CH_2Si\leftarrow$) and where R, R', R'' and R* denote alkyl or alkenyl groups having up to 6 carbon atoms and a, b and c denote the mole fractions of the respective structural units, and making the polysilazane infusible using $NH_3$, Urotropin, an amine or a chlorosilane of the formula $(CH_3)_nSiCl_m$, in which n + m = 4 and n = 1, 2 or 3.

**2.** The process as claimed in claim 1, wherein R, R', R'' and R* are alkyl or alkenyl groups having up to 3 carbon atoms.

**3.** The process as claimed in claim 1, wherein $R = R' = R'' = R^* = CH_3$.

4. The process as claimed in one of claims 1 to 3, wherein fibers of C, SiC, $Si_3N_4$ or $Al_2O_3$ or carbon fiber-reinforced carbon are used.

5. The process as claimed in one of claims 1 to 3, wherein, a molten polysilazane is first spun into fibers, these fibers are then converted by heat treatment at 800 to 1600 °C into $Si_3N_4$ fibers, a two-dimensional structure is produced from the latter and said structure is then impregnated with the same or a different molten polysilazane, the polysilazane is converted into the infusible state and the product is heated to 800 to 2000 °C.

6. The process as claimed in one of claims 1 to 5, wherein the sequence of the three process steps is carried out at least twice in succession on the same fibers.

7. The process as claimed in one of claims 1 to 6, wherein compounds of magnesium, aluminum, yttrium or of a rare earth metal, singly or as a mixture, are dissolved in the molten polysilazane as filler for the fibers and the fibers are impregnated with this solution instead of with pure polysilazane.

8. The process as claimed in claim 7, wherein the nitrates, alcoholates, acetates or acetylacetonates of the said metals are used, singly or as a mixture, as the filler.

**Revendications**

1. Procédé pour la préparation de céramique composite renforcée de fibres selon lequel dans une première étape on imprègne les fibres d'un polysilazane liquide en fusion, dans une deuxième étape on transforme le polysilazane dans les fibres en état infusible et, dans une troisième étape, on chauffe les fibres imprégnées à 800 à 2000 °C sous une atmosphère d'azote, de gaz noble ou d'ammoniac, caractérisé en ce qu'on utilise un polysilazane liquide en fusion de formule générale (I) :

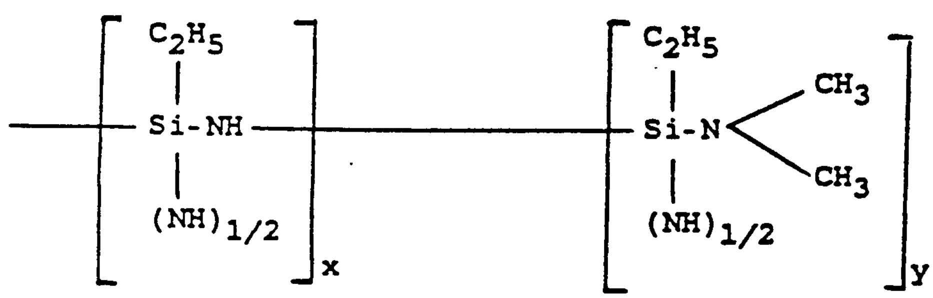

dans laquelle x, y représentent les fractions molaires des deux unités de structures et x + y = 1 et x = 0,7 à 0,95, ou de formule générale (II) :

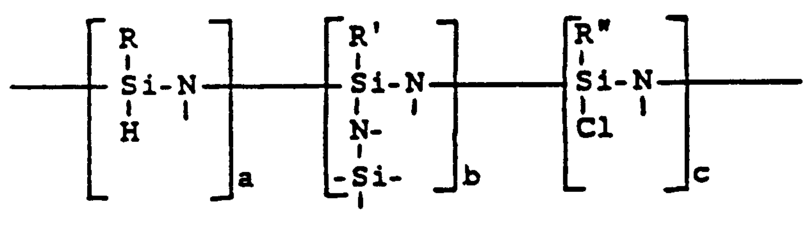

les valences libres sur les atomes d'azote étant saturées d'atomes H ou de radicaux silyle R*CiXN< (X = H, Cl, N<, $CH_2CH_2Si\leftarrow$) et R, R', R'', R* représentant des groupes alkyle ou alcényle avec jusqu'à 6 atomes de carbone et a, b, c des fractions molaires des unités de structure respectives et le polysilazane est rendu infusible, à l'aide de $NH_3$, d'urotropine, d'une amine ou d'un chlorosilane de formule générale $(CH_3)_nSiCl_m$, dans laquelle n + m = 4 et n = 1, 2 ou 3.

2. Procédé selon la revendication 1, caractérisé en ce que R, R', R'', R* sont des groupes alkyle ou alcényle avec jusqu'à 3 atomes de carbone.

3. Procédé selon la revendication 1, caractérisé en ce que R = R' = R'' = $CH_3$.

4. Procédé selon l'une des revendications 1 à 3, caractérisé en ce qu'on utilise des fibres de C, SiC, $Si_3N_4$ ou $Al_2O_3$ ou le carbone renforcé de fibres de carbone.

5. Procédé selon l'une des revendications 1 à 3, caractérisé en ce que d'abord on file le polysilazane liquide en fusion en fibres, on transforme celles-ci à une température de 800 à 1600 °C thermiquement en fibres de $Si_3N_4$, à partir de ceci on prépare un produit bidimensionnel, on imprègne celui-ci du même ou d'un autre polysilazane liquide en fusion, on transforme le polysilazane en l'état insoluble et on chauffe à 800 à 2000 °C.

6. Procédé selon l'une des revendications 1 à 5, caractérisé en ce qu'on met en oeuvre la série des trois étapes de procédé au moins deux fois successivement sur les mêmes fibres.

7. Procédé selon l'une des revendications 1 à 6, caractérisé en ce qu'on dissout des composés de magnésium, d'aluminium, d'yttrium ou d'un métal de terres rares en tant que charge pour les fibres, dans le polysilazane fondu et on imprègne les fibres de cette solution au lieu de polysilazane pur.

8. Procédé selon la revendication 7, caractérisé en ce qu'on utilise en tant que charges les nitrates, les alcoolates, les acétates ou les acétylacétonates des métaux cités, individuellement ou en tant que mélanges.